# EUROPÄISCHE PATENTSCHRIFT

(11) **EP 2 898 231 B1**
(45) Veröffentlichungstag und Bekanntmachung des Hinweises auf die Patenterteilung: **06.11.2019**
(21) Anmeldenummer: 13782957.8
(22) Anmeldetag: 16.09.2013
(51) Int. Cl.: F16C 33/72, F16C 33/78, F16J 15/32, F16C 27/06

(54) **RÜHRWERK MIT DICHTRING**
AGITATOR COMPRISING A SEALING RING
AGITATEUR AVEC BAGUE D'ÉTANCHÉITÉ

(30) Priorität: 20.09.2012 DE 102012018652
(43) Veröffentlichungstag der Anmeldung: 29.07.2015
(73) Patentinhaber: EagleBurgmann Germany GmbH & Co. KG, 82515 Wolfratshausen (DE)
(72) Erfinder: PORTENLÄNGER, Josef, 82544 Endlhausen (DE); EIBL, Christian, 83646 Bad Tölz (DE)
(74) Vertreter: Hoefer & Partner Patentanwälte mbB
(86) Internationale Anmeldenummer: PCT/EP2013/002776
(87) Internationale Veröffentlichungsnummer: WO 2014/044376

(56) Entgegenhaltungen:
- WO-A1-2009/057895
- WO-A1-2009/068050
- DE-U1-202009 013 547
- US-A- 5 137 285
- US-A- 5 303 935
- US-A- 5 897 119
- US-A1- 2008 284 110

## Beschreibung

Die vorliegende Erfindung betrifft ein Rührwerk mit Dichtring.

Beispielsweise bei Rührwerken oder Mischwerken, z.B. für die chemische Industrie, mit einer Arbeitskammer wird eine Welle durch ein Gehäuse des Rühr- oder Mischwerks hindurchgeführt, an deren Ende ein Rührer oder dgl. angeordnet ist. Um zu verhindern, dass das in der Arbeitskammer befindliche Material nach außen gelangt, sind Abdichtungen an der Wellendurchführung notwendig. Hierbei können insbesondere auch Druckunterschiede zwischen der Atmosphäre und der Arbeitskammer vorliegen.

Aus der DE 20 2009 013 547 U1 ist eine Wellendurchführung bekannt, bei der eine Dichtungsanordnung zur Abdichtung der Welle vorgesehen ist und zusätzlich eine Drossel- und Abstreiferanordnung angeordnet ist. Um zu vermeiden, dass insbesondere nach Reinigungsprozessen Undichtigkeiten an der Dichtungsanordnung auftreten, ist die Drossel- und Abstreiferanordnung vorgesehen. Diese Drossel- und Abstreiferanordnung umfasst einen separaten Führungsring und einen Abstreiferring, wobei weder der Führungsring noch der Abstreiferring die Welle berühren. Durch die zusätzliche Anordnung der Drossel- und Abstreiferanordnung ergibt sich bei einer derartigen Wellenabdichtung jedoch ein relativ langer Aufbau in axialer Richtung, da zur Abdichtung noch zusätzliche Dichtelemente vorgesehen werden. Die US 2008/0284110 A1 zeigt einen Dichtring mit zwei Lippenabstreifern und einem separaten Gleitlager.

Es ist daher Aufgabe der vorliegenden Erfindung, ein Rührwerk mit einem rotierenden Bauteil und einem Dichtring und einer Dichtpatrone zum Abdichten des rotierenden Bauteils bereitzustellen, welches einfach aufgebaut ist und einfach hergestellt werden kann und einen möglichst kleinen axialen Bauraum einnimmt.

Diese Aufgabe wird durch ein Rührwerk mit den Merkmalen des Anspruchs 1 gelöst. Die Unteransprüche zeigen bevorzugte Weiterbildungen der Erfindung.

Das erfindungsgemäße Rührwerk mit einem rotierenden Bauteil und einem Dichtring zur Abdichtung am rotierenden Bauteil, insbesondere einer Welle oder dgl., weist den Dichtring auf, der als einteiliges Bauteil mit einem Grundkörper und einer Lippendichtung vorgesehen ist. Der Grundkörper weist eine zum rotierenden Bauteil gerichtete Fläche auf. Die Lippendichtung, die einstückig mit dem Grundkörper gebildet ist und somit aus dem gleichen Material wie der Grundkörper hergestellt ist, ist nachgiebig und übernimmt eine Abdichtungsfunktion am rotierenden Bauteil. Somit ist die Lippendichtung eingerichtet, an dem rotierenden Bauteil anzuliegen und abzudichten. Somit kann erfindungsgemäß ein Dichtring bereitgestellt werden, bei dem bei auftretenden Wellenbewegungen der Grundkörper die Lippendichtung nachführt. Hierdurch wird sichergestellt, dass im Betrieb die Lippendichtung immer optimal am rotierenden Bauteil anliegt. Die Lippendichtung kann beispielsweise durch einen spanlosen Einstechvorgang vom Grundkörper hergestellt werden. Vorzugsweise ist die Lippendichtung nur minimal nachgiebig, d.h. in einem vorbestimmten kleinen Bereich nachgiebig. Ferner ist der Grundkörper als Gleitlager vorgesehen und die zum rotierenden Bauteil gerichtete Fläche ist als Gleitlagerfläche vorgesehen. Hierdurch kann der erfindungsgemäße Dichtring neben der Abdichtfunktion auch noch eine Lagerfunktion des rotierenden Bauteils übernehmen.

Gemäß einer weiteren bevorzugten Ausgestaltung der vorliegenden Erfindung umfasst der Dichtring ferner ein separates Gleitlagerband bzw. ein Gleitlagerring, welches an der zum rotierenden Bauteil gerichteten Fläche am Grundkörper angeordnet ist. Das Gleitlagerband stellt somit unabhängig vom Material des Grundkörpers eine Gleitlagerfläche für den Dichtring bereit, so dass das Material für das Gleitlagerband frei wählbar ist. Das Gleitlagerband ist dabei ein separates Bauteil. Besonders bevorzugt weist der Grundkörper eine ringförmige Ausnehmung oder Nut auf, welche in der zum rotierenden Bauteil gerichteten Fläche angeordnet ist. Dabei ist das Gleitlagerband in der ringförmigen Ausnehmung angeordnet. Hierdurch wird eine schnelle und einfache Befestigung des Gleitlagerbands an dem Grundkörper des Druckrings ermöglicht.

Weiter bevorzugt weist die Lippendichtung eine Eigenspannung auf, welche in Richtung zum Grundkörper gerichtet ist. Diese Eigenspannung der Lippendichtung stellt sicher, dass die Lippendichtung immer möglichst eng an dem rotierenden Bauteil anliegt. Ferner ermöglicht die Eigenspannung der Lippendichtung eine einfache Zentrierung des Dichtrings um das rotierende Bauteil.

Der Dichtring ist aus einem einen Füllstoff umfassenden, thermoplastischen Kunststoff hergestellt. Es werden Glasfasern als Füllstoff zur Verstärkung verwendet. Als thermoplastischer Kunststoff findet Polytetrafluorethylen (PTFE) Verwendung. Die Kombination von PTFE mit Glasfasern weist nur einen geringen Wärmeausdehnungskoeffizienten, insbesondere in einem Temperaturbereich von -10°C bis +200°C auf. Ferner weist dieser Werkstoff eine sehr gute chemische Beständigkeit auf. Darüber hinaus weist der Werkstoff eine sehr niedrige Oberflächenspannung auf, so dass ein Benetzen der Oberfläche des Dichtrings erheblich erschwert wird. Hierdurch kann vermieden werden, dass unerwünscht Medium an der Oberfläche des Dichtrings anhaftet. Hierdurch können insbesondere die flexiblen und elastischen Eigenschaften der Lippendichtung über die gesamte Lebensdauer des Dichtrings sichergestellt werden. Zusätzlich können als Füllstoff Partikel, insbesondere Graphit verwendet werden.

Weiterhin weist die Kombination von PTFE mit Glasfasern einen relativ geringen Reibkoeffizienten auf. Insbesondere kann ein sog. "Stick-Slip-Effekt" verhindert werden. Der Glasfaseranteil liegt vorzugsweise in einem Bereich von 10 bis 20%, besonders bevorzugt bei 15%. Hierbei ermöglicht die Verwendung der Glasfaser eine besonders hohe Verschleißfestigkeit des Werkstoffs. Auch wirkt der Glasfaseranteil dem sogenannten Kaltfluss, d.h., einer langsamen, aber bleibenden Verformung des Materials bei einer aufgebrachten Druckspannung, entgegen. Weiter bevorzugt werden weitere Füllstoffe dem thermoplastischen Kunststoff beigemischt, wie z.B. Kohle oder Graphit.

Besonders bevorzugt ist der Grundkörper des Dichtrings derart eingerichtet, dass im normalen Betrieb der Grundkörper das rotierende Bauteil nicht berührt. Erfindungsgemäß soll der Grundkörper nur bei Bewegungen des rotierenden Bauteils in Radialrichtung mit diesem in Kontakt kommen, um eine entsprechende Ausgleichsbewegung auch der Lippendichtung sicherzustellen und somit in jedem Betriebszustand eine sichere Abdichtung gewährleisten.

Weiter bevorzugt ist eine Länge eines zwischen dem Grundkörper und der Lippendichtung vorgesehenen Schlitzes kleiner als eine Hälfte einer Länge des Grundkörpers in Radialrichtung. Hierdurch wird sichergestellt, dass die Lippendichtung nicht zu lang wird und somit im Betrieb die Gefahr des unerwünschten Abreißens der Lippendichtung vom Grundkörper auftreten könnte.

Gemäß einer weiteren bevorzugten Ausgestaltung der vorliegenden Erfindung weist der Grundkörper eine Vielzahl von Öffnungen auf, welche eingerichtet sind, Stifte, insbesondere mit Spiel, aufzunehmen. Das Spiel ist dabei insbesondere in Radialrichtung vorhanden. Die in den Öffnungen des Grundkörpers angeordneten Stifte verhindern dabei ein unerwünschtes Mitdrehen des erfindungsgemäßen Druckrings mit dem rotierenden Bauteil. Durch das vorhandene Spiel zwischen den Öffnungen im Grundkörper und den Stiften kann ferner eine in Radialrichtung schnell und einfach reagierende schwimmende Lagerung des Druckrings sichergestellt werden.

Weiter bevorzugt betrifft die vorliegende Erfindung eine Baugruppe mit einem erfindungsgemäßen Dichtring und einem Gehäuse, in welchem der Dichtring aufgenommen ist. Das Gehäuse weist vorzugsweise eine Aufnahme und eine Scheibe auf, wobei der Dichtring zwischen der Aufnahme und der Scheibe angeordnet ist. Die Aufnahme weist vorzugsweise einen ringförmigen Flansch mit L-förmigem Querschnitt auf, welcher den Dichtring in Axialrichtung übergreift.

Weiter bevorzugt umfasst die Baugruppe ein zusätzliches Dichtelement, insbesondere einen O-Ring, welches am Dichtring angeordnet ist, und den Dichtring in Axialrichtung des Dichtrings vorspannt. Somit weist der O-Ring neben seiner Funktion zur Abdichtung zwischen dem Dichtring und dem Gehäuse der Baugruppe noch die Vorspannfunktion für den Dichtring auf.

Weiterhin betrifft die vorliegende Erfindung eine Dichtungspatrone mit einer Vielzahl von erfindungsgemäßen Dichtringen. Die Dichtringe sind dabei vorzugsweise in gleichen Richtungen oder in unterschiedlichen Richtungen angeordnet. Weiter bevorzugt weist die Dichtpatrone ein die Dichtringe umschließendes Gehäuse auf. Vorzugsweise sind im Gehäuse Anschlüsse vorgesehen, um z. B. ein Sperrmedium in einem Bereich zwischen zwei benachbarten Dichtringen zuzuführen. Durch die Verwendung des Sperrmediums kann zusätzlich noch ein Druck auf die Lippendichtung erzeugt werden, wenn die Lippendichtung in Richtung des Sperrraums, welchem das Sperrmedium zugeführt wird, gerichtet ist. Des weiteren können die Anschlüsse für Kontroll- oder Überwachungsfunktionen verwendet werden. Auch können die Anschlüsse zur Leckageabfuhr genutzt werden.

Weiterhin betrifft die vorliegende Erfindung ein Rührwerk, umfassend eine rotierende Welle, und einen erfindungsgemäßen Dichtring und/oder eine erfindungsgemäße Baugruppe. Vorzugsweise ist die rotierende Welle dabei von einer Wellenbuchse umgeben, an welcher die Lippendichtung des Dichtrings abdichtet. Vorzugsweise ist hierbei zwischen dem Grundkörper des Dichtrings und dem rotierenden Bauteil ein ringförmiger Spalt oder ein Einschnitt vorhanden. In radialer Richtung weist der Spalt vorzugsweise eine Breite von 0,1 mm auf.

Wie oben beschrieben, wird die vorliegende Erfindung vorzugsweise in einem Rührwerk verwendet.

Nachfolgend werden bevorzugte Ausführungsbeispiele in der begleitenden Zeichnung beschrieben. In der Zeichnung sind dabei gleiche bzw. funktional gleiche Teile bei den verschiedenen Ausführungsbeispielen jeweils mit den gleichen Bezugszeichen bezeichnet. In der Zeichnung ist:
- Fig. 1: eine schematische Schnittansicht eines Dichtrings gemäß einem ersten Ausführungsbeispiel der Erfindung,
- Fig. 2: eine schematische, vergrößerte Teilschnittansicht von Fig. 1,
- Fig. 3: eine schematische Schnittansicht des Dichtrings von Fig. 1 im montierten Zustand,
- Fig. 4: eine schematische Ansicht einer Baugruppe mit einem erfindungsgemäßen Dichtring,
- Fig. 5: eine schematische Schnittansicht eines Dichtrings gemäß einem zweiten Ausführungsbeispiel im montierten Zustand, und
- Fig. 6: eine schematische Schnittansicht einer Dichtungspatrone mit einer Vielzahl von erfindungsgemäßen Dichtringen.

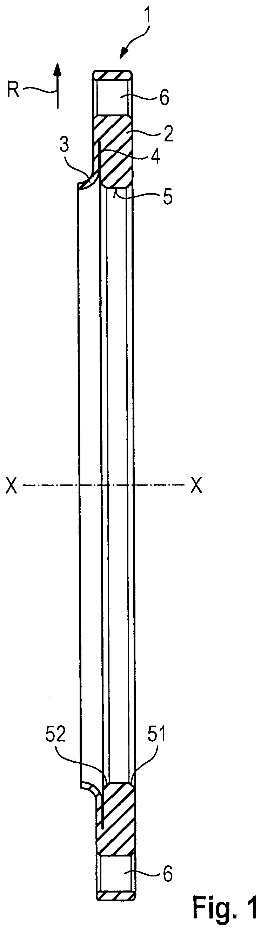

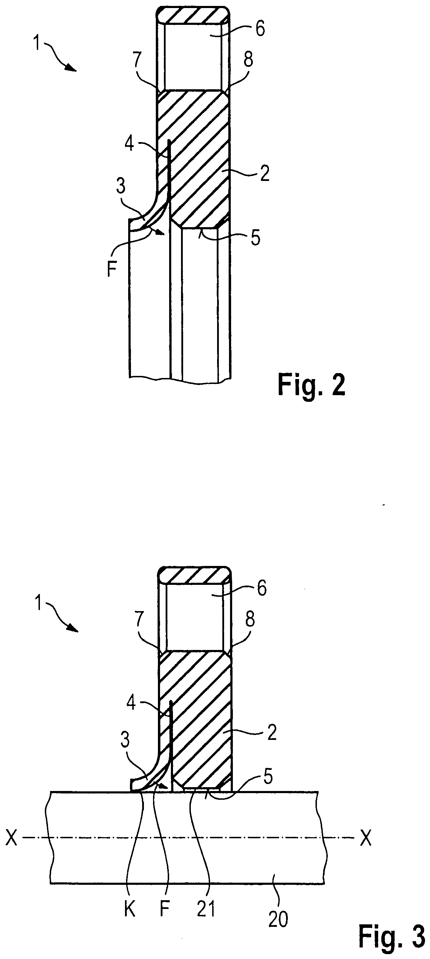

Nachfolgend wird unter Bezugnahme auf die Fig. 1 bis 3 ein Dichtring 1 gemäß einem ersten bevorzugten Ausführungsbeispiel der Erfindung im Detail beschrieben. Wie aus Fig. 1 ersichtlich ist, ist der Dichtring 1 als einstückiges Bauteil hergestellt und umfasst einen Grundkörper 2 und eine Lippendichtung 3. Die Lippendichtung 3 wird durch Einschneiden des Grundkörpers 2 am inneren Umfang hergestellt, so dass ein Schlitz 4 zwischen Teilen der Lippendichtung 3 und dem Grundkörper 2 entsteht. Eine Tiefe des Schlitzes 4 ist dabei derart gewählt, dass die Tiefe kleiner ist als eine Hälfte einer Abmessung des Grundkörpers 2 in radialer Richtung R. Die Lippendichtung B ist dadurch minimal nachgiebig, vorzugsweise im Bereich von wenigen zehntel Millimetern.

Am Grundkörper 2 ist an dessen nach innen gerichteter Seite eine Gleitlagerfläche 5 vorgesehen. Am Rand der Gleitlagerfläche 5 sind dabei zwei relativ große Fasen 51, 52 gebildet. X-X bezeichnet dabei eine Axialrichtung des Dichtrings.

Ferner sind im Druckring 1 vier Öffnungen 6 ausgebildet, welche in Axialrichtung X-X durch den Grundkörper 2 verlaufen. Die Öffnungen 6 sind dabei radial außerhalb einem radialen Ende des Schlitzes 4 angeordnet. Die Öffnungen 6 sind eingerichtet, um einen Stift aufzunehmen, welcher verhindert, dass sich der Dichtring 1 gemeinsam mit einem rotierenden Bauteil 20, welches in diesem Ausführungsbeispiel eine Welle ist, mitdreht. Die in den Öffnungen 6 angeordneten Stifte bilden somit eine Verdrehsicherung, wobei im Bereich der Öffnung 6 der Grundkörper 2 abgesetzte erste und zweite große Fasen oder Vertiefungen 7, 8 zu beiden Seiten der Öffnung 6 aufweist. Hierdurch kann insbesondere bei Bewegungen des Druckrings 1 in radialer Richtung eine Reibung im Bereich der Seitenflächen des Druckrings reduziert werden.

Im Betrieb dichtet der Dichtring 1 an dem rotierenden Bauteil 20 in der Weise ab, dass ausschließlich die Lippendichtung 3 sich mit dem rotierenden Bauteil 20 in Kontakt K befindet. Zwischen der Gleitlagerfläche 5 des Grundkörpers 2 und dem rotierenden Bauteil befindet sich ein Spalt 21. Eine Spaltbreite in radialer Richtung R beträgt hierbei ungefähr 0,1 mm. Im idealen Betrieb würden sich keinerlei Wellenauslenkungen in radialer Richtung R ergeben, so dass ständig der ringförmige Spalt 21 vorhanden wäre.

In Praxis erfolgen jedoch, insbesondere bei Verwendung in Rührwerken, treten radiale Wellenauslenkungen auf, so dass die Welle mit der Gleitlagerfläche 5 in Kontakt kommen kann. Da der Spalt 21 jedoch relativ klein ist, ist in jeder Betriebssituation, d.h., auch bei einem Kontakt zwischen dem rotierenden Bauteil 20 und der Gleitlagerfläche 5 eine sichere Abdichtung durch die immer an der Oberfläche des rotierenden Bauteils anliegenden Lippendichtung gewährleistet. Die Lippendichtung weist hierbei eine Eigenvorspannung F auf, welche in Richtung zum Grundkörper 2 gerichtet ist und die Lippendichtung 3 bei Bewegungen des rotierenden Bauteils 20 nachführt.

Um möglichst gute chemische Eigenschaften und eine hohe Verschleißfestigkeit aufzuweisen, ist der einstückige Dichtring 1 aus PTFE mit einem Glasfaseranteil von 15% hergestellt. Ferner wird vorzugsweise die Lippendichtung 3, beispielsweise durch Aufziehen auf einen Dorn, schon in die in den Fig. 1 bis 3 gezeigte gebogene Form gebracht, wodurch die Dichtlippe 3 eine verbesserte Eigenvorspannung F aufweist. Weiterhin sorgt die derart vorgespannte Lippendichtung 3 auch immer für eine möglichst gute Zentrierung des rotierenden Bauteils.

Somit kann erfindungsgemäß mit einem einzigen Bauteil mit einer Lippendichtung 3 in allen Betriebszuständen eine sichere Abdichtung am rotierenden Bauteil 20 sichergestellt werden. Selbst Wellenauslenkungen in radialer Richtung können durch den erfindungsgemäßen Dichtring aufgefangen werden.

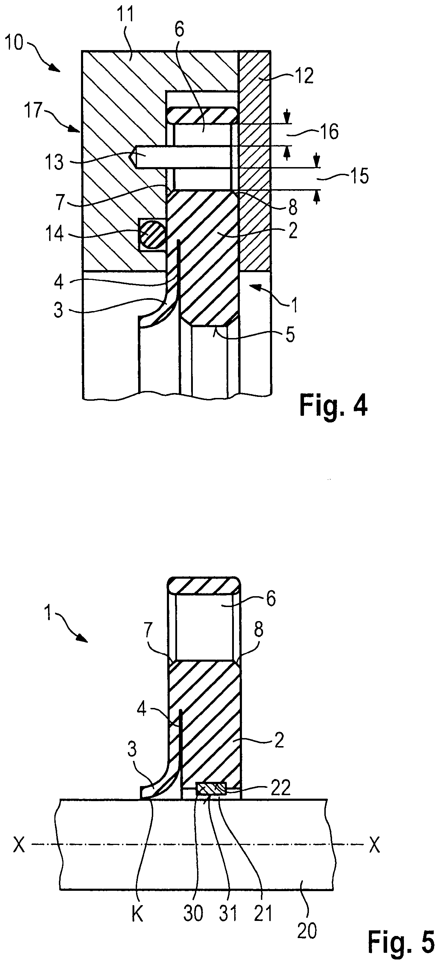

Fig. 4 zeigt die Verwendung eines in den Fig. 1 bis 3 dargestellten Dichtrings 1 in einer Baugruppe 10 mit einem Gehäuse 17. Das Gehäuse 17 umfasst eine im Schnitt L-förmige Aufnahme 11, welche den Dichtring 1 in axialer Richtung übergreift, und eine Scheibe 12. Der Dichtring 1 ist in der L-förmigen Aufnahme 11 aufgenommen und somit zwischen der Aufnahme 11 und der Scheibe 12 angeordnet. Ferner umfasst die Baugruppe ein Sekundärdichtelement 14, insbesondere einen O-Ring, welcher zwischen der Aufnahme 11 und dem Dichtring 1 angeordnet ist. Der O-Ring stellt dabei eine Abdichtung zwischen der Aufnahme 11 und dem Dichtring 1 bereit sowie eine Vorspannung des Dichtrings 1 in axialer Richtung in Richtung auf die Scheibe 12 bereit. Ferner ist in der Aufnahme 11 ein Stift 13 fixiert, wobei der Stift 13 mit radialem Spiel 15, 16 in der Öffnung 6 im Dichtring 1 aufgenommen ist. Da in diesem Ausführungsbeispiel vier Öffnungen 6 im Dichtring 1 vorgesehen sind, sind entsprechend auch vier Stifte 13 vorgesehen. Die Stifte 13 dienen somit als Verdrehsicherung, erlauben jedoch, dass der Dichtring 1 in Radialrichtung R Bewegungen mitmachen kann. Somit kann insbesondere bei radialen Auslenkungen des rotierenden Bauteils eine Beschädigung des Dichtrings 1 vermieden werden. Erfindungsgemäß kann die Baugruppe 10 vormontiert werden und somit als komplett vormontierte Baugruppe an einem rotierenden Bauteil angeordnet werden.

Fig. 5 zeigt einen Dichtring 1 gemäß einem zweiten Ausführungsbeispiel. Der Dichtring 1 des zweiten Ausführungsbeispiels entspricht im Wesentlichen dem des ersten Ausführungsbeispiels, wobei im Unterschied zum ersten Ausführungsbeispiel beim zweiten Ausführungsbeispiel zusätzlich noch ein separater Gleitlagerring 30 vorgesehen ist. Der Gleitlagerring 30 weist eine Gleitfläche 31 auf, welche der Außenseite des rotierenden Bauteils 20 zugewandt ist. Der Gleitlagerring 30 ist in einer im Grundkörper 2 vorgesehenen ringförmigen Ausnehmung 22 angeordnet. Wie im ersten Ausführungsbeispiel ist dabei wieder ein Spalt 21 zwischen der Gleitfläche 31 und dem rotierenden Bauteil 20 vorgesehen. Die Lippendichtung 3 liegt wieder in abdichtender Weise an dem rotierenden Bauteil 20 an.

Durch das Vorsehen des separaten Gleitlagerrings 30 kann hierbei insbesondere eine Materialwahl am Grundkörper 2 flexibler vorgenommen werden, da der Grundkörper 2 nicht mehr die Lagerfunktion selbst ausführen muss, sondern hierzu ein entsprechend ausgebildeter separater Gleitlagerring 30 vorgesehen ist.

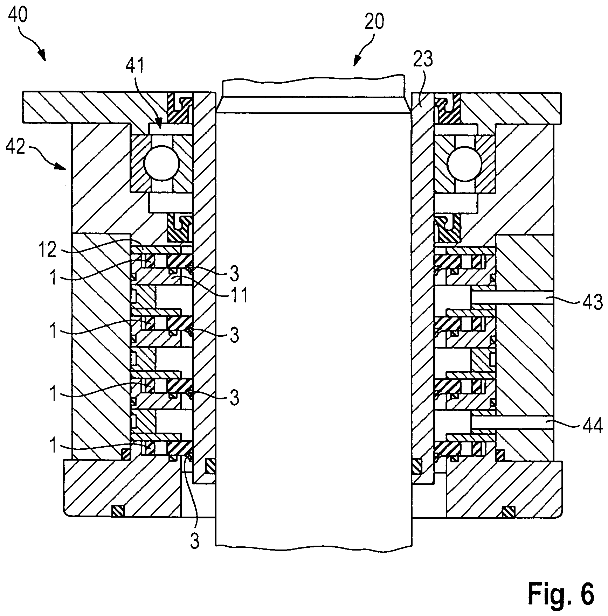

Fig. 6 zeigt eine Patronenanordnung 40, in welcher vier erfindungsgemäße Dichtringe 1 in Reihe angeordnet sind. Eine Wellenhülse 23 ist an einer Welle angeordnet und bildet zusammen mit der Welle das rotierende Bauteil 20. Die Patronenanordnung 40 umfasst ferner ein mehrteiliges Patronengehäuse 42, ein Wälzlager 41 sowie mehrere nicht bezeichnete Dichtelemente in Form von O-Ringen oder dgl. Die Patronenanordnung 40 ist eine Wellendurchführung für ein Rührwerk, wobei die Dichtringe 1 eine Innenseite des Rührwerks von einer Außenseite abdichten.

Wie aus Fig. 6 ersichtlich ist, ist dabei die Orientierung der Dichtringe 1 an der Wellenhülse 23 nicht gleich. Ein Dichtring (bei Ansicht von Fig. 6 der zweite von oben) ist mit seiner Lippendichtung 3 in Richtung des Wälzlagers 41 gerichtet und die beiden anderen Dichtringe 1 sind mit ihrer Lippendichtung 3 abgewandt vom Wälzlager 41 angeordnet. Hierbei umfasst die Patronenanordnung 40 ferner eine erste und eine zweite Fluidzuführung 43, 44. Hierdurch kann z. B. ein Sperrfluid in einen Sperrfluidraum zwischen benachbarten Dichtringen 1 zugeführt werden. Durch die Verwendung des Sperrfluids kann ferner noch ein zusätzlicher Druck auf die jeweiligen Lippendichtungen 3 der Dichtringe 1 ausgeführt werden, so dass eine Abdichtungen der Lippendichtungen 3 an der Wellenhülse 23 noch verbessert wird.

### Bezugszeichenliste

- 1: Dichtring
- 2: Grundkörper
- 3: Lippendichtung
- 4: Schlitz
- 5: Gleitlagerfläche
- 6: Öffnungen
- 7: erste Vertiefung
- 8: zweite Vertiefung
- 10: Baugruppe
- 11: Aufnahme
- 12: Scheibe
- 13: Stift
- 14: Sekundärdichtelement
- 15, 16: radiales Spiel
- 17: Gehäuse
- 20: rotierendes Bauteil
- 21: Spalt
- 22: ringförmige Ausnehmung
- 23: Wellenhülse
- 30: separater Gleitlagerring
- 31: Gleitfläche
- 40: Patronenanordnung
- 41: Wälzlager
- 42: Patronengehäuse
- 43,44: Fluidanschluß
- 51: erste Fase
- 52: zweite Fase
- F: Eigenspannung
- K: Kontakt
- R: Radialrichtung
- X-X: Axialrichtung

## Patentansprüche

1. Rührwerk, umfassend ein rotierendes Bauteil (20) und wenigstens einen Dichtring (1) zur Abdichtung am rotierenden Bauteil (20), wobei der Dichtring umfasst:
- einen Grundkörper (2) mit einer zum rotierenden Bauteil (20) gerichteten Fläche (5), und
- eine nachgiebige Lippendichtung (3),
- wobei die Lippendichtung (3) eingerichtet ist, am rotierenden Bauteil anzuliegen und abzudichten,
- wobei der Grundkörper (2) als Gleitlager ausgebildet ist,
**dadurch gekennzeichnet, dass** die Lippendichtung (3) einstückig mit dem Grundkörper (2) gebildet ist und die Lippendichtung (3) und der Grundkörper (2) aus Polytetrafluorethylen mit Glasfasern als Füllstoff hergestellt sind.

2. Rührwerk nach Anspruch 1, ferner umfassend einen separaten Gleitlagerring (30), welcher am Grundkörper (2) an dessen zum rotierenden Bauteil gerichteten Fläche (5) angeordnet ist.

3. Rührwerk nach Anspruch 2, **dadurch gekennzeichnet, dass** der Grundkörper (2) eine ringförmige Ausnehmung (22) in der zum rotierenden Bauteil gerichteten Fläche (5) aufweist, in welcher der Gleitlagerring (30) angeordnet ist.

4. Rührwerk nach einem der vorhergehenden Ansprüche, **dadurch gekennzeichnet, dass** die Lippendichtung (3) eine Eigenspannung (F) aufweist, welche in Richtung zum Grundköper (2) gerichtet ist.

5. Rührwerk nach einem der vorhergehenden Ansprüche, **dadurch gekennzeichnet, dass** der Grundkörper (2) eingerichtet ist, nur bei Bewegungen des rotierenden Bauteils (20) in Radialrichtung mit diesem in Kontakt zu treten.

6. Rührwerk nach einem der vorhergehenden Ansprüche, **dadurch gekennzeichnet, dass** der Grundkörper (2) Öffnungen (6) aufweist, welche eingerichtet sind, Stifte mit Radialspiel aufzunehmen.

7. Rührwerk, ferner umfassend ein Gehäuse (17) zur Aufnahme des Dichtrings (1).

8. Rührwerk nach Anspruch 7, **dadurch gekennzeichnet, dass** das Gehäuse eine Aufnahme (11) zur Aufnahme des Dichtrings und eine Scheibe (12) umfasst, wobei der Dichtring (1) zwischen der Aufnahme (11) und der Scheibe (12) angeordnet ist.

9. Rührwerk nach Anspruch 7 oder 8, ferner umfassend ein Dichtelement (14), welches am Dichtring (1) angeordnet ist, um den Dichtring (1) in Axialrichtung (X-X) vorzuspannen.

10. Rührwerk nach einem der vorhergehenden Ansprüche, mit einer Patronenanordnung, umfassend ein Patronengehäuse (42) und eine Vielzahl von Dichtringen (1).

11. Rührwerk nach Anspruch 10, **gekennzeichnet durch** wenigstens einen Fluidanschluss (43, 44), um ein Fluid in einen Fluidraum zwischen benachbarten Dichtringen (1) zuzuführen und/oder abzuführen.

## Claims

1. Stirring unit, comprising a rotating component (20) and at least one sealing ring (1) for sealing on the rotating component (20), comprising
- a base body (2) having a surface (5) that is oriented towards the rotating component (20), and
- a flexible lip seal (3),
- wherein the lip seal (3) is configured to rest against and to seal the rotating component,
- wherein the base body (2) is configured as a sliding bearing,
**characterized in that** the lip seal (3) is formed integrally with the base body (2) and the base body (2) and the lip seal (3) are made from polytetrafluorethylene comprising glass fibers as a filler.

2. Stirring unit according to claim 1, further comprising a separate sliding bearing ring (30) which is arranged on the base body (2) on the surface (5) thereof oriented towards the rotating component.

3. Stirring unit according to claim 2, wherein the base body (2) comprises an annular recess (22) in the surface (5) which is oriented towards the rotating component and in which the sliding bearing ring (30) is arranged.

4. Stirring unit according to any one of the preceding claims, wherein the lip seal (3) displays an internal stress (F) which is oriented towards the base body (2).

5. Stirring unit according to any one of the preceding claims, wherein the base body (2) is configured to get into contact with the rotating component (20) only upon movements of said rotating component (20) in radial direction.

6. Stirring unit according to any one of the preceding claims, wherein the base body (2) comprises openings (6) which are configured to receive pins with radial play.

7. Stirring unit according to any one of the preceding claims, comprising a housing (17) for receiving the sealing ring (1).

8. Stirring unit according to claim 7, wherein in that the housing comprises a receptacle (11) for receiving the sealing ring and a disk (12), wherein the sealing ring (1) is arranged between the receptacle (11) and the disk (12).

9. Stirring unit according to claim 7 or 8, further comprising a sealing element (14) which is arranged on the sealing ring (1) to preload the sealing ring (1) in axial direction (X-X).

10. Stirring unit according to any of the preceding claims, comprising a cartridge arrangement comprising a cartridge housing (42) and a plurality of sealing rings.

11. Stirring unit according to claim 10, **characterized by** at least one fluid port (43, 44) to supply and/or discharge a fluid into/from a fluid chamber between neighboring sealing rings (1).

## Revendications

1. Agitateur, comprenant un composant rotatif (20) et au moins une bague d'étanchéité (1) pour assurer l'étanchéité au niveau du composant rotatif (20), dans lequel la bague d'étanchéité comprend :
- un corps de base (2) avec une surface (5) orientée vers le composant rotatif (20), et
- un joint à lèvre (3) souple,
- dans lequel le joint à lèvre (3) est conçu pour s'appuyer sur le composant rotatif et assurer l'étanchéité,
- dans lequel le corps de base (2) est réalisé en tant que palier lisse,
**caractérisé en ce que** le joint à lèvre (3) est formé d'un seul tenant avec le corps de base (2) et le joint à lèvre (3) et le corps de base (2) sont fabriqués en polytétrafluoroéthylène avec des fibres de verre en tant que matériau de remplissage.

2. Agitateur selon la revendication 1, comprenant en outre une bague de palier lisse (30) séparée, laquelle est agencée sur le corps de base (2) au niveau de sa surface (5) orientée vers le composant rotatif.

3. Agitateur selon la revendication 2, **caractérisé en ce que** le corps de base (2) présente un évidement (22) en forme de bague, dans lequel est agencée la bague de palier lisse (30), dans la surface (5) orientée vers le composant rotatif.

4. Agitateur selon l'une quelconque des revendications précédentes, **caractérisé en ce que** le joint à lèvre (3) présente une contrainte propre (F) qui est orientée en direction du corps de base (2).

5. Agitateur selon l'une quelconque des revendications précédentes, **caractérisé en ce que** le corps de base (2), uniquement en cas de mouvements du composant rotatif (20) dans la direction radiale, est conçu pour entrer en contact avec celui-ci.

6. Agitateur selon l'une quelconque des revendications précédentes, **caractérisé en ce que** le corps de base (2) présente des ouvertures (6) qui sont conçues pour loger des broches avec un jeu radial.

7. Agitateur selon l'une quelconque des revendications précédentes, comprenant en outre un boîtier (17) pour loger la bague d'étanchéité (1).

8. Agitateur selon la revendication 7, **caractérisé en ce que** le boîtier comprend un logement (11) pour loger la bague d'étanchéité et une rondelle (12), dans lequel la bague d'étanchéité (1) est agencée entre le logement (11) et la rondelle (12).

9. Agitateur selon la revendication 7 ou 8, comprenant en outre un élément d'étanchéité (14) qui est agencé au niveau de la bague d'étanchéité (1) pour précontraindre la bague d'étanchéité (1) dans la direction axiale (X-X).

10. Agitateur selon l'une quelconque des revendications précédentes, avec un agencement de cartouche, comprenant un boîtier de cartouche (42) et une pluralité de bagues d'étanchéité (1).

11. Agitateur selon la revendication 10, **caractérisé par** au moins un raccord de fluide (43, 44) pour acheminer et/ou évacuer un fluide dans un espace de fluide entre des bagues d'étanchéité (1) adjacentes.
